Europäisches Patentamt

European Patent Office

Office européen des brevets

(19)

(11) Numéro de publication: **0 289 406**
**A1**

(12) **DEMANDE DE BREVET EUROPEEN**

(21) Numéro de dépôt: **88400991.1**

(22) Date de dépôt: **22.04.88**

(51) Int. Cl.⁴: **F 28 D 21/00**
F 28 F 9/26, F 28 F 9/00,
F 02 B 29/04, F 28 D 1/04

(30) Priorité: **27.04.87 FR 8705932**

(43) Date de publication de la demande:
**02.11.88 Bulletin 88/44**

(84) Etats contractants désignés: **DE ES GB IT**

(71) Demandeur: **VALEO**
**64 Avenue de la Grande Armée**
**F-75017 Paris (FR)**

(72) Inventeur: **Marsais, Christian**
**11, Square Charles Gounod**
**F-78120 Rambouillet (FR)**

**Dupuis, Hervé**
**19, rue des Ruffins**
**F-93100 Montreuil (FR)**

(54) **Echangeur de chaleur à deux étages et son procédé de montage.**

(57) Echangeur de chaleur pour le refroidissement de l'air de suralimentation du moteur d'un véhicule automobile, comprenant un premier étage d'échange de chaleur dans lequel l'air de suralimentation cède de la chaleur à un liquide de refroidissement et un second étage dans lequel il cède de la chaleur à l'air atmosphérique.

Entre une boîte d'entrée (1) et une boîte de sortie (2), l'air de suralimentation circule à l'extérieur des tubes orientés transversalement d'un premier faisceau de tubes (9), dans lesquels circule le liquide, puis à l'intérieur des tubes (23) orientés longitudinalement d'un second faisceau (22), à l'extérieur desquels passe librement l'air atmosphérique. Le premier faisceau est entouré latéralement par un caisson tubulaire (8), dont les extrémités (7, 27) sont soudées de façon étanche respectivement à la boîte d'entrée (1) et au collecteur amont (25) du second faisceau de tubes, le collecteur aval (26) de ce dernier étant soudé de façon étanche à la boîte de sortie (2).

FIG. 1

## Description

### Echangeur de chaleur à deux étages et son procédé de montage.

L'invention concerne un échangeur de chaleur à deux étages destiné à être traversé par un premier fluide, celui-ci échangeant de la chaleur avec un second fluide dans un premier étage d'échange de chaleur, puis avec un troisième fluide dans un second étage d'échange de chaleur.

L'invention s'applique notamment au refroidissement, à la sortie du compresseur, de l'air de suralimentation du moteur thermique d'un véhicule automobile, les premier, second et troisième fluide étant respectivement l'air de suralimentation, un liquide de refroidissement et l'air atmosphérique.

Le but de l'invention est de réaliser un tel échangeur de chaleur de façon simple et économique, et de telle sorte que le premier fluide soit canalisé de façon efficace pour venir balayer les éléments d'échange thermique.

L'échangeur de chaleur selon l'invention comprend, alignés selon un trajet pour un premier fluide, une boîte d'entrée pour le premier fluide munie d'un raccord d'entrée et ouverte vers l'aval, un premier étage d'échange de chaleur entre le premier fluide et un second fluide, un second étage d'échange de chaleur entre le premier fluide et un troisième fluide, et une boîte de sortie pour le premier fluide ouverte vers l'amont et munie d'un raccord de sortie, le premier étage comprenant un premier faisceau de tubes orientés transversalement à la direction générale dudit trajet, associé à au moins un collecteur, au moins une boîte à fluide et des raccords d'entrée et de sortie pour le passage du second fluide, et entouré par un caisson tubulaire délimitant un passage pour le premier fluide, le second étage comprenant un second faisceau de tubes orientés selon ladite direction et s'étendant entre un collecteur amont et un collecteur aval pour le passage du premier fluide, le caisson tubulaire étant assemblé de façon étanche par son bord amont au bord de l'ouverture de la boîte d'entrée et par son bord aval au collecteur amont du second étage et le collecteur aval du second étage étant assemblé de façon étanche au bord de l'ouverture de la boîte de sortie.

Dans le cas où le troisième fluide est l'air atmosphérique, l'espace compris entre les tubes du second faisceau peut communiquer librement avec l'extérieur de l'échangeur.

Selon un mode de réalisation de l'invention, le caisson tubulaire forme une paroi tubulaire monobloc entourant le premier faisceau, avec son ou ses collecteurs et sa ou ses boîtes à fluide, et traversé par les raccords d'entrée et de sortie associés.

Selon un autre mode de réalisation, le caisson est composé de deux demi-caissons sous forme de profilés en U, le fond d'au moins un demi-caisson étant perforé et constituant un collecteur et les branches latérales des deux demi-caissons se prolongeant deux à deux pour former des parois continues limitant ledit passage dans la direction transversale aux tubes du premier faisceau.

Avantageusement, l'extrémité libre d'une branche d'un demi-caisson présente une nervure qui pénètre dans une gorge prévue à l'extrémité libre de la branche associée de l'autre demi-caisson.

Cette structure est avantageusement complétée par une boîte à fluide soudée sur la face extérieure du collecteur formant le fond du ou de chaque demi-caisson, les raccords d'entrée et de sortie du second fluide étant intégrés à l'une au moins de ces boîtes à fluide.

L'invention a également pour objet un procédé de montage d'un échangeur tel que défini ci-dessus, dans lequel on assemble de façon étanche les collecteurs du second faisceau pré-assemblé respectivement au caisson et à la boîte de sortie.

Dans le cas d'un caisson à paroi tubulaire monobloc, après assemblage du collecteur amont du second faisceau au caisson, on introduit dans ce dernier le premier faisceau, muni de son ou de ses collecteurs et de sa ou de ses boîtes à fluide, puis on met en place les raccords pour le second fluide et on assemble la boîte d'entrée au caisson.

Dans le cas d'un caisson composé de deux demi-caissons, avant assemblage de celui-ci au collecteur amont du second faisceau, on réalise le premier étage en fermant les deux demi-caissons sur les tubes du premier faisceau, en ayant, au préalable, fixé les boîtes à fluide respectivement sur chaque demi-caisson.

La boîte d'entrée peut être également assemblée au caisson après fermeture des deux demi-caissons.

D'autres caractéristiques et avantages de l'invention ressortiront de la description détaillée ci-après et des dessins annexés dans lesquels :

   - les figures 1 et 2 sont des vues en perspective montrant les principaux éléments de l'échangeur de chaleur selon l'invention, avant leur assemblage, respectivement pour deux modes de réalisation;

   - la figure 1a est une vue en élévation de l'échangeur de la figure 1 après assemblage;

   - la figure 3 est une vue partielle en coupe de l'échangeur de la figure 1 après assemblage;

   - la figure 4 est une vue de dessus, partiellement en coupe, du caisson et du premier faisceau de tubes de l'échangeur de la figure 2.

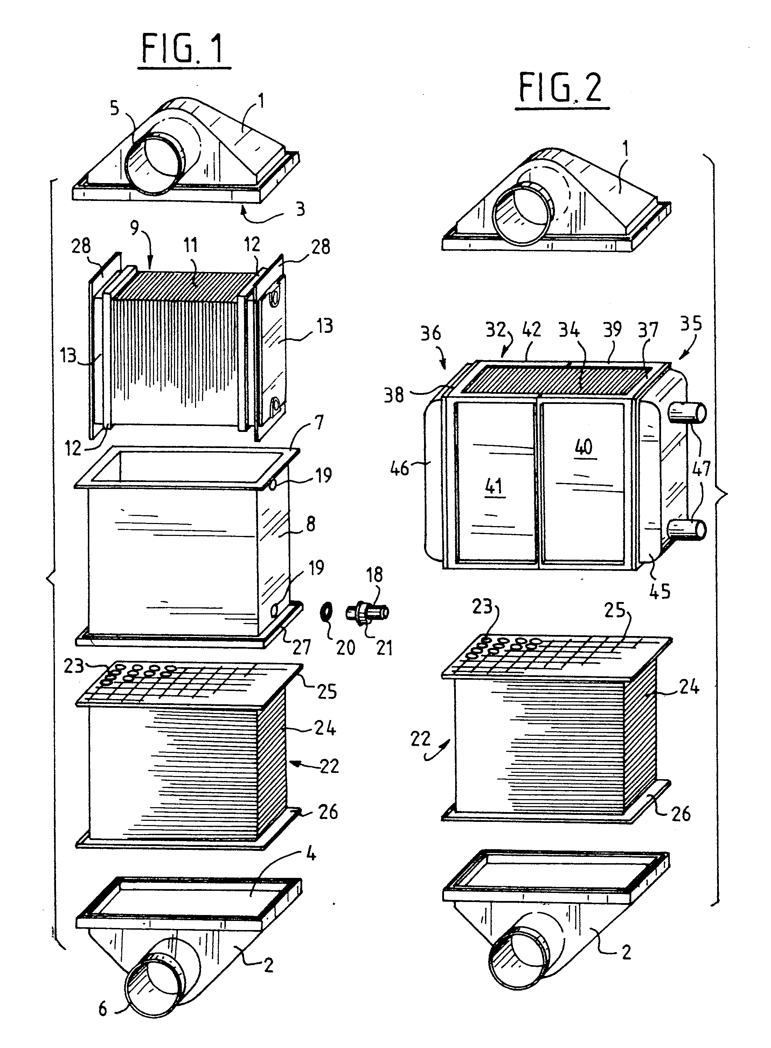

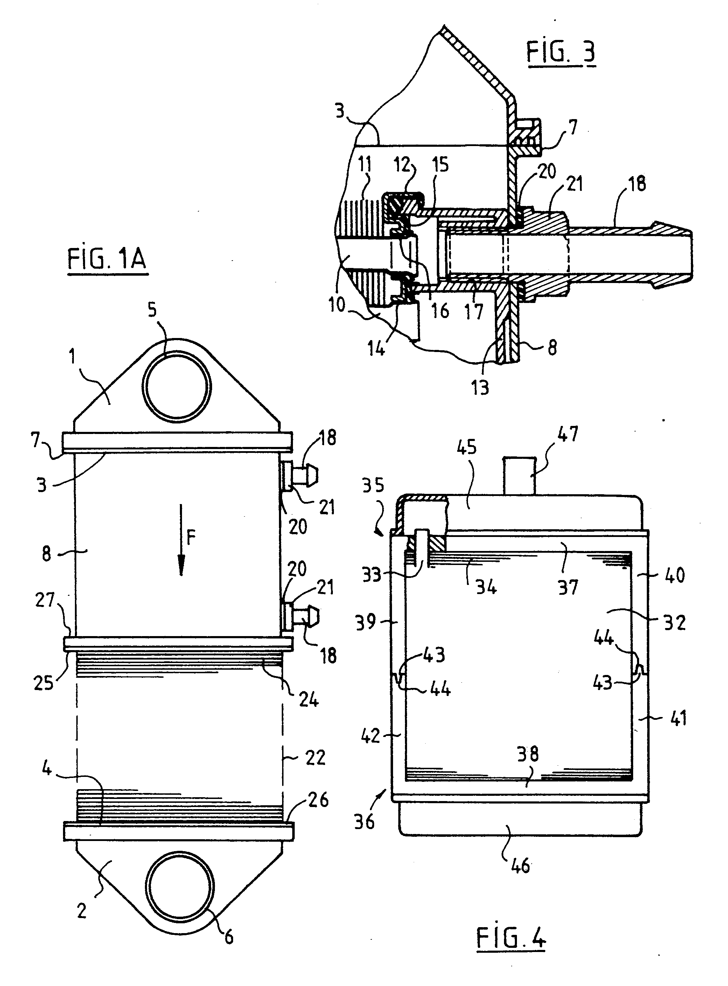

La figure 1 représente en perspective les composants fondamentaux d'un échangeur de chaleur à deux étages destiné au refroidissement de l'air de suralimentation du moteur d'un véhicule automobile, ce même échangeur étant représenté assemblé à la figure 1a.

L'échangeur de chaleur illustré comprend une boite d'entrée 1 et une boîte de sortie 2 pour l'air de suralimentation, sensiblement identiques et formées chacune d'une pièce moulée en matière plastique. Chacune des boîtes 1 et 2 présente une face ouverte 3, 4 tournée vers l'autre boîte et est munie d'un raccord d'entrée 5 ou de sortie 6 destiné à être raccordé au circuit d'air de suralimentation extérieur à l'échangeur. Le raccord d'entrée 5 et le raccord de sortie 6 s'étendent transversalement à la direction générale du trajet de l'air de suralimentation dans l'échangeur, indiquée par la flèche F de la figure 1a, parallèlement l'un à l'autre et dans le même sens. Cependant, cette disposition n'est pas nécessaire et lesdits raccords peuvent s'étendre dans n'importe quelle direction, par exemple parallèlement à la direction générale du trajet de l'air de suralimentation.

Au bord de la face ouverte 3 de la boîte d'entrée 1 est assemblé de façon étanche un bord extrême 7 d'un caisson 8 ayant la forme d'une paroi tubulaire dont l'axe s'étend selon la direction F. Le caisson 8 entoure latéralement un premier faisceau de tubes 9 prévu pour la circulation d'un liquide de refroidissement destiné à recevoir de la chaleur de l'air de suralimentation dans un premier étage d'échangeur de chaleur de l'échangeur.

Les tubes 10 du faisceau 9, dont deux sont visibles partiellement à la figure 3, s'étendent transversalement à la direction F et traversent des ailettes de diffusion de chaleur planes et parallèles entre elles 11, qui s'étendent parallèlement à la direction F et entre lesquelles passe le courant d'air de suralimentation. Aux extrémités du faisceau de tubes 9 sont disposées deux plaques perforées ou collecteurs 12 traversées à étanchéité respectivement par les deux extrémités ouvertes de chacun des tubes rectilignes 10. Chaque collecteur 12 est associé à une boîte à fluide 13. De façon classique, mais non nécessaire, le collecteur 12 présente des collets 14 entourant les extrémités des tubes et est recouvert sur sa face tournée vers la boîte à fluide par une feuille d'élastomère 15 définissant des manchons d'étanchéité 16 entre les tubes et les collets 14. La fermeture étanche de la boîte à fluide est assurée par le sertissage de la périphérie du collecteur sur le bord de la boîte à fluide, la périphérie de la feuille 15 servant de joint d'étanchéité.

Dans l'échangeur assemblé, l'ensemble formé par le faisceau de tubes 9, les collecteurs 12 et les boîtes à fluide 13 est entouré latéralement par le caisson 8. L'une des boîtes à fluide 13 présente deux passages 17, dont un seul est représenté à la figure 3, pour la disposition de raccords 18 d'entrée et de sortie du liquide de refroidissement à travers des ouvertures 19 du caisson 8.

Le second étage d'échange de chaleur comprend un faisceau de tubes 22 analogue au faisceau 9, mais dont les tubes 23 sont orientés selon la direction F et les ailettes 24 perpendiculairement à cette direction. Les extrémités des tubes 23 traversent deux plaques collectrices planes 25 et 26.

Dans l'échangeur de chaleur assemblé, la périphérie du collecteur amont 25 du second étage est assemblée de façon étanche au bord extrême 27, opposé au bord 7, du caisson, et la périphérie du collecteur aval 26 est assemblée de façon étanche au bord de la face ouverte 4 de la boîte de sortie 2.

Avantageusement, les boîtes d'entrée et de sortie d'air 1 et 2, le caisson 8, les collecteurs 25 et 26 et les boîtes à fluide 13 sont en matière plastique et sont assemblés entre eux par exemple par soudage par friction.

Pour réaliser l'assemblage de l'échangeur de chaleur des figures 1 et 1a, on soude d'abord les collecteurs 25 et 26 du second étage, préalablement assemblés au faisceau de tubes 22, respectivement au caisson 8 et à la boîte de sortie 2, de préférence en maintenant le faisceau 22 immobile et en faisant vibrer le caisson et la boîte de sortie. On introduit ensuite le faisceau de tubes 9 du premier étage, muni de ses collecteurs et de ses boîtes à fluide, dans le caisson 8 et on soude la boîte d'entrée 1 sur ce dernier, de préférence en la faisant vibrer et en maintenant immobile le reste de l'échangeur. Les raccords 18 peuvent être mis en place avant ou après soudage de la boîte 1.

En fonctionnement, l'air pénètre dans la boîte d'entrée 1 par le raccord 5, franchit l'ouverture 3, balaie les faces des ailettes 11 et les faces externes des tubes 10, cédant ainsi de la chaleur au liquide de refroidissement qui circule dans ces derniers entre les boîtes à fluide 13. Il passe ensuite à l'intérieur des tubes 23 du second étage où il cède de la chaleur à l'air atmosphérique qui passe librement entre les ailettes 24 du faisceau 22, puis franchit l'ouverture 4 de la boîte de sortie 2 et ressort par le raccord 6.

Des variantes sont possibles quant à l'assemblage des boîtes à eau et des collecteurs du premier étage et quant à l'étanchéité entre les tubes et les collecteurs. Par exemple, les boîtes à fluide peuvent être soudées par friction aux collecteurs, et les tubes peuvent être indifféremment emmanchés à force ou sertis dans les trous des collecteurs, avec ou sans interposition de joints d'étanchéité.

Dans l'échangeur de chaleur des figures 2 et 4, les boîtes d'entrée et de sortie 1 et 2 de l'air de suralimentation et le faisceau de tubes 22 du second étage d'échange de chaleur, avec ses collecteurs 25 et 26, sont identiques aux éléments correspondants de l'échangeur des figures 1 et 1a et ne seront donc pas décrits de nouveau. Seul diffère donc le premier étage d'échange de chaleur. Dans ce premier étage, un faisceau de tubes 32, composé de tubes 33 et d'ailettes 34 dont la structure et la disposition sont semblables à celles des tubes 10 et des ailettes 11 du premier exemple, est enfermé dans un caisson composé de deux demi-caissons 35 et 36, chacun ayant un profil en U avec un fond 37, 38 et deux branches 39 et 40 pour le demi-caisson 35, 41 et 42 pour le demi-caisson 36. Les fonds 37 et 38 sont plans et perforés et forment des collecteurs pour le faisceau de tubes 32, les extrémités des tubes traversant à étanchéité les perforations des collecteurs. Les extrémités libres des branches 39 et 41 présentent des nervures 43 qui pénètrent respectivement dans des gorges 44 ménagées dans les extrémités libres des branches 42 et 40, les branches coopérant ainsi deux à deux pour former des parois continues de part et d'autre du faisceau 32.

Sur les faces externes des collecteurs 37 et 38 sont fixées respectivement de façon étanche, par exemple par soudage par friction, des boîtes à fluide 45 et 46. La boîte à fluide 45 est munie de deux raccords d'entrée et de sortie de fluide 7 venus de moulage.

Pour assembler l'échangeur de chaleur des figures 2 et 4, il faut rapprocher l'un de l'autre les demi-caissons 35 et 36 munis des boîtes à fluide 45 et 46, en enfermant le faisceau de tubes 32, avant d'assembler le caisson ainsi formé au collecteur 25 du second étage à la boîte d'entrée d'air 1, la boîte de sortie d'air 2 pouvant être assemblée au collecteur 26 avant ou après l'assemblage du collecteur 25 au caisson. La cohésion du caisson et du faisceau de tubes associé est assurée par l'assemblage du caisson au collecteur 25 et à la boîte 1, sans qu'il soit nécessaire de prévoir des moyens de solidarisation directe entre les deux demi-caissons. Si on le souhaite, un joint d'étanchéité peut être mis en place au fond des gorges 44 des demi-caissons.

Le fonctionnement de l'échangeur de chaleur des figures 2 et 4 est identique à celui de l'échangeur décrit précédemment. Sa structure et son montage sont plus simples. En particulier, les moyens d'assemblage et d'étanchéité des raccords d'entrée et de sortie du liquide de refroidissement sont éliminés. La seule réserve concernant ce mode de réalisation est que, lorsque le caisson est soudé par friction au collecteur 25, il est nécessaire de faire vibrer l'un des deux faisceaux de tubes, qui doit par conséquent être prévu pour résister aux vibrations.

Bien que, dans les exemples décrits, le premier étage d'échange de chaleur comporte deux collecteurs et deux boîtes à fluide dont l'une porte les deux raccords d'entrée et de sortie, il est également possible de disposer les deux raccords respectivement sur les deux boîtes à fluide, ou de prévoir un seul collecteur et une seule boîte à fluide associés à des tubes en U.

De même, il peut être prévu que la boîte d'entrée 1 pour l'air de suralimentation forme un ensemble monobloc avec le caisson 8, évitant ainsi une opération d'assemblage entre celle-ci et le caisson. Dans ce cas là, on introduit le faisceau 9 dans le caisson 8 avant de venir souder le collecteur 25 au caisson 8.

En outre, il est décrit que tous les éléments de l'échangeur sont assemblés entre eux par soudage. On peut envisager toutes autres solutions d'assemblage, par exemple mécaniques avec interposition d'un joint d'étanchéité entre les pièces à assembler, ou tout simplement par collage.

## Revendications

1. Echangeur de chaleur à deux étages comprenant, alignés selon un trajet pour un premier fluide, une boîte d'entrée (1) pour le premier fluide munie d'un raccord d'entrée (5) et ouverte vers l'aval (3), un premier étage d'échange de chaleur entre le premier fluide et un second fluide, un second étage d'échange de chaleur entre le premier fluide et un troisième fluide, et une boîte de sortie (2) pour le premier fluide, ouverte en amont (4) et munie d'un raccord de sortie, le premier étage comprenant un premier faisceau (9) de tubes (10) orientés transversalement à la direction générale (F) dudit trajet, associé à au moins un collecteur (12), au moins une boîte à fluide (13) et des raccords (18) d'entrée et de sortie pour le passage du second fluide, et entouré par un caisson tubulaire (8) délimitant un passage pour le premier fluide, le second étage comprenant un second faisceau (22) de tubes (23) orientés selon ladite direction et s'étendant entre un collecteur amont (25) et un collecteur aval (26) pour le passage du premier fluide, le caisson tubulaire étant assemblé de façon étanche par son bord amont (7) au bord de l'ouverture (3) de la boîte d'entrée et par son bord aval (27) au collecteur amont (25) du second étage et le collecteur aval (26) du second étage étant assemblé de façon étanche au bord de l'ouverture (4) de la boîte de sortie (2).

2. Echangeur de chaleur selon la revendication 1, caractérisé en ce que l'espace compris entre les tubes du second faisceau communique librement avec l'extérieur de l'échangeur.

3. Echangeur de chaleur selon l'une des revendications 1 et 2, caractérisé en ce que le caisson tubulaire forme une paroi tubulaire monobloc (8) entourant le premier faisceau, son ou ses collecteurs et sa ou ses boîtes à fluide, et traversée par les raccords d'entrée et de sortie associés.

4. Echangeur de chaleur selon l'une des revendications précédentes, caractérisé en ce que la boîte d'entrée (1) forme avec le caisson (8) un ensemble monobloc en une seule pièce.

5. Echangeur de chaleur selon l'une des revendications 1 et 2, caractérisé en ce que le caisson est composé de deux demi-caissons (35, 36) sous forme de profilés en U, le fond (37, 38) d'au moins un demi-caisson étant perforé et constituant un collecteur et les branches latérales (39-41) des deux demi-caissons se prolongeant deux à deux pour former des parois continues limitant ledit passage dans la direction transversale aux tubes du premier faisceau (9).

6. Echangeur de chaleur selon la revendication 5, caractérisé en ce que l'extrémité libre d'une branche (39, 41) d'un demi-caisson présente une nervure (43) qui pénètre dans une gorge (44) prévue à l'extrémité libre de la branche associée (42, 41) de l'autre demi-caisson.

7. Echangeur de chaleur selon l'une des revendications 5 et 6, caractérisé en ce qu'une boîte à fluide (45, 46) est assemblée de façon étanche sur la face extérieure du collecteur (37, 38) formant le fond du demi-caisson.

8. Echangeur de chaleur selon la revendication 7, caractérisé en ce que les raccords (47) d'entrée et de sortie du second fluide sont intégrés à l'une au moins des boîtes à fluide.

9. Echangeur de chaleur selon l'une des revendications précédentes, caractérisé en ce que lesdits assemblages étanches sont des soudures par friction.

10. Procédé de montage d'un échangeur selon l'une des revendications précédentes, caractérisé en ce qu'on assemble de façon étanche les collecteurs du second faisceau pré-assemblé respectivement au caisson et à la boîte de sortie.

FIG. 1

FIG. 2

0289406

FIG. 3

FIG. 1A

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 428 737 (GARRETT)<br>* Page 5, ligne 36 - page 8, ligne 13; page 9, lignes 4-8; figures * | 1,2,10 | F 28 D 21/00<br>F 28 F 9/26<br>F 28 F 9/00<br>F 02 B 29/04<br>F 28 D 1/04 |
| A | --- | 3,4 | |
| Y | PATENT ABSTRACTS OF JAPAN, vol. 9, no. 238 (M-416)[1961], page 113 M 416, 25 septembre 1985; & JP-A-60 93 118 (MAZDA K.K.) 24-05-1985<br>* En entier * | 1,2,10 | |
| A | AUTOMOTIVE ENGINEERS, vol. 88, no. 7, juillet 1980, pages 77-80, Society of Automotive Engineers, Inc.; B.J. MEHALLICK et al.: "Two-stage charge air cooling raises diesel output"<br>* Page 77, colonne 3, ligne 16 - page 79, colonne 3, ligne 10; figures 2,4; photographie de la page 77 * | 1-3,9, 10 | |
| A | GB-A-2 051 232 (G.M.C.)<br>* Page 1, ligne 98 - page 2, ligne 82; figures * | 1 | **DOMAINES TECHNIQUES RECHERCHES (Int. Cl.4)**<br><br>F 28 D<br>F 28 F<br>F 02 B |
| A | FR-A-2 347 530 (PERKINS)<br>* Page 7, lignes 9,10,21-31; figures 1,2,6,9 * | 3,4 | |
| A | GB-A-1 329 538 (STIRLING)<br>* Page 1, lignes 67-90; figure * | 5 | |
| A | DE-A-3 344 220 (AUDI)<br>* Page 4, lignes 19-21; figure *<br>---        -/- | 9 | |

Le présent rapport a été établi pour toutes les revendications

| Lieu de la recherche | Date d'achèvement de la recherche | Examinateur |
|---|---|---|
| LA HAYE | 13-07-1988 | KLEIN C. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | MTZ MOTORTECHNISCHE ZEITSCHRIFT, vol. 47, no. 4, avril 1986, pages 151-157; H.-W. REIMOLD: "Bauarten und Berechnung von Ladeluftkühlern für Otto- und Dieselmotoren" --- | | |
| A | US-A-2 984 456 (YOUNG) ----- | | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 13-07-1988 | KLEIN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)